# EUROPÄISCHE PATENTSCHRIFT

(11) **EP 0 857 370 B1**
(45) Veröffentlichungstag und Bekanntmachung des Hinweises auf die Patenterteilung: **21.07.1999**
(21) Anmeldenummer: 96945809.0
(22) Anmeldetag: 01.10.1996
(51) Int. Cl.: H02K 1/14, H02K 15/02

(54) **VERFAHREN ZUM HERSTELLEN EINER FÜGEVERBINDUNG ZWISCHEN ERREGERPOLEN UND POLGEHÄUSE EINER ELEKTROMASCHINE UND NACH DEM VERFAHREN HERGESTELLTE MASCHINE**
PROCESS FOR CREATING A JOINT BETWEEN THE EXCITER POLES AND THE POLE CASING OF AN ELECTRIC MACHINE, AND ELECTRIC MACHINE THUS PRODUCED
PROCEDE DE JONCTION ENTRE LES POLES EXCITATEURS ET LA CARCASSE POLAIRE D'UNE MACHINE ELECTRIQUE, ET MACHINE AINSI FABRIQUEE

(30) Priorität: 17.10.1995 DE 19538483
(43) Veröffentlichungstag der Anmeldung: 12.08.1998
(73) Patentinhaber: ROBERT BOSCH GMBH, 70442 Stuttgart (DE)
(72) Erfinder: SCHUSTEK, Siegfried, D-71254 Ditzingen (DE); KESSLER, Hans-Jürgen, D-74374 Zaberfeld (DE); FRANZ, Peter, D-31199 Diekholzen (DE); KOPP, Wolfgang, D-31141 Hildesheim (DE); KRETER, Bernd, D-31135 Hildesheim (DE); BALSA CARRERA, Serafin, E-39005 Santander (ES)
(86) Internationale Anmeldenummer: DE9601888
(87) Internationale Veröffentlichungsnummer: WO9715107

(56) Entgegenhaltungen:
- EP-A- 0 015 165
- FR-A- 2 239 037
- FR-A- 2 488 749
- FR-A- 2 611 096

## Beschreibung

Die Erfindung betrifft ein Verfahren zum Herstellen einer Fügeverbindung zwischen Erregerpolen und Polgehäuse einer Elektromaschine, mit den im Oberbegriff des Anspruchs 1 genannten Merkmalen sowie eine danach hergestellte elektrische Maschine.

### Stand der Technik

Es ist bekannt, bei eine elektrische Erregung aufweisenden Elektromaschinen die die Erregerwicklung tragenden Erregerpole an der Innenseite eines im wesentlichen zylindrisch ausgebildeten Polgehäuses zu befestigen. Die Befestigung der Erregerpole an dem Polgehäuse kann bekanntermaßen beispielsweise mittels einer Schraubverbindung, einer Schweißverbindung oder einer Klebverbindung erfolgen. Darüber hinaus ist aus der FR-OS 2 488 749 ein Verfahren bekannt, bei dem Erregerpole an dem Polgehäuse mittels einer kraftschlüssigen Fügeverbindung befestigt sind, wobei in eine konische Ausnehmung der Erregerpole Material des Polgehäuses verdrängt wird. Hierbei ist nachteilig, daß die konischen Ausnehmungen nur sehr aufwendig mit Präzisionswerkzeugen herstellbar sind. Um eine sichere Verdrängung des Materials des Polgehäuses in die sich zum Grund hin erweiternde konische Ausnehmung der Erregerpole gleichmäßig zu erreichen, bedarf es einer hochpräzisen und damit aufwendigen Justage der Fügewerkzeuge zu der Ausnehmung.

### Vorteile der Erfindung

Mit dem erfindungsgemäßen Verfahren mit den im Anspruch 1 genannten Merkmalen ist es demgegenüber möglich, in einfacher Weise eine form- und kraftschlüssige Verbindung zwischen den Erregerpolen und dem Polgehäuse zu schaffen, bei der ein Sekundärluftspalt zwischen den Erregerpolen und dem Polgehäuse auf ein Minimum beschränkt wird. Dadurch, daß mit dem Fügewerkzeug das Material des Polgehäuses und des jeweiligen Erregerpoles punktuell an wenigstens einer Fügestelle in eine korrespondierende Ausnehmung des Erregerpoles verdrängt wird, kann eine kraftschlüssige Verbindung zwischen den Erregerpolen und dem Polgehäuse mittels einfacher Verfahrensschritte erreicht werden, die darüber hinaus mittels eines einfach aufgebauten Werkzeuges durchgeführt werden können. Es werden hohe Fügekräfte aufgebracht, die auf Dauer eine großflächige Anlage der Erregerpole an dem Polgehäuse gewährleisten. Durch das Einbringen der hohen Fügekräfte wird der Spalt zwischen den Erregerpolen und dem Polgehäuse auf sein mögliches technisches Minimum begrenzt. Das lediglich punktuelle Verdrängen des Materials des Polgehäuses in eine entsprechende Ausnehmung der Erregerpole sichert einen äußerst geringen Materialverlust der Erregerpole, so daß eine Beeinträchtigung von diesen elektromagnetischen Eigenschaften im wesentlichen ausgeschlossen werden kann.

Vorteilhafte Ausgestaltungen der Erfindung ergeben sich aus den in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Schnittdarstellung durch eine Verbindungsstelle zwischen einem Erregerpol und einem Polgehäuse vor der Fügung;
- Figur 2: die Verbindungsstelle gemäß Figur 1 nach der Fügung;
- Figur 3: ein Schliffbild der erfindungsgemäßen Fügestelle;
- Figur 4: eine Verbindungsstelle vor der Fügung nach einem weiteren Ausführungsbeispiel;
- Figur 5: die Verbindungsstelle gemäß Figur 4 nach der Fügung;
- Figur 6: eine Verbindungsstelle nach der Fügung nach einem weiteren Ausführungsbeispiel und
- Figur 7: eine Schnittdarstellung eines Erregerpoles nach einem weiteren Ausführungsbeispiel;

### Beschreibung der Ausführungsbeispiele

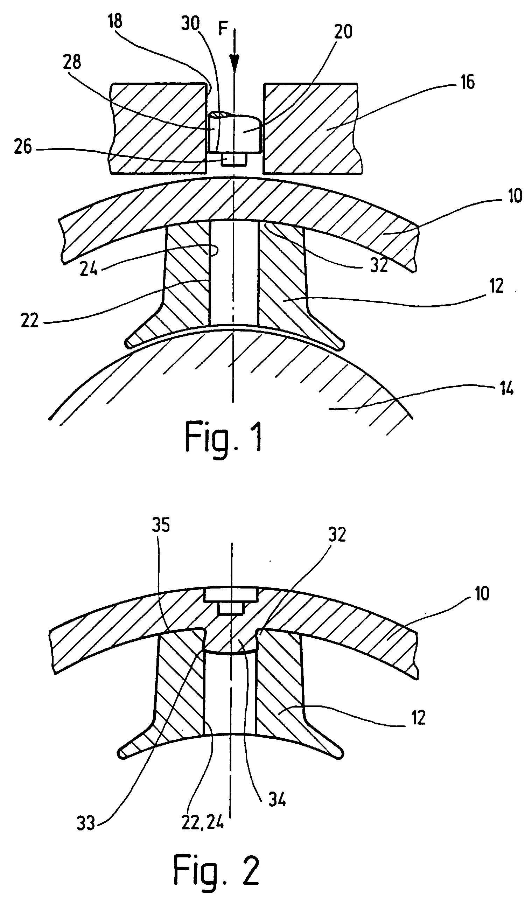

Figur 1 zeigt ausschnittsweise in einer Schnittdarstellung ein Polgehäuse 10 und einen Erregerpol 12 einer insgesamt nicht dargestellten Elektromaschine. Die Elektromaschine besitzt in der Regel vier oder sechs Erregerpole 12, die über den Innenumfang des zylindrisch ausgebildeten Polgehäuses 10 angeordnet sind. Anhand der ausschnittsweisen Darstellung eines Erregerpoles 12 soll das Verfahren zur Herstellung einer Fügeverbindung zwischen dem Polgehäuse 10 und den Erregerpolen 12 verdeutlicht werden. Die Erregerpole 12 sind hierbei über den Umfang eines Dornes 14, der Bestandteil einer Fügevorrichtung ist, angeordnet. Die Erregerpole 12 sind zuvor mit den hier nicht dargestellten Erregerwicklungen versehen und auf geeignete Weise über den Umfang des Dornes 14 arretiert. Der Dorn 14 mit den Erregerpolen 12 wird nunmehr in das Polgehäuse 10 verlagert. Hierbei kann sowohl eine Relativbewegung des Dornes 14 mit den Erregerpolen 12 zu dem Polgehäuse 10 und/oder eine Relativbewegung des Polgehäuses 10 zu festpositionierten Erregerpolen 12 erfolgen. Die Fügevorrichtung besitzt ferner einen Werkzeughalter 16, der wenigstens eine Werkzeugführung 18 für ein Fügewerkzeug 20 aufweist. Das Fügewerkzeug 20 ist mittels einer geeigneten Vorrichtung, beispielsweise einer hydraulischen oder pneumatischen Vorrichtung, mit einer Fügekraft F beaufschlagbar.

Eine Positionierung des Polgehäuses 10 und/oder des Dornes 14 mit den Erregerpolen 12 erfolgt derart, daß jedem Fügewerkzeug 20 eine zuvor in die Erregerpole 12 eingebrachte Ausnehmung 22 zugeordnet ist. Nach einem bevorzugten Ausführungsbeispiel ist das Fügewerkzeug 20 ein kreisrunder Stempel, dem somit eine korrespondierende Bohrung 24 (Ausnehmung 22) zugeordnet ist. Die Bohrung 24 kann hierbei - wie in der Figur 1 dargestellt - als Durchgangsbohrung und nach einem weiteren Ausführungsbeispiel als Sackbohrung ausgeführt sein. Weiterhin können nach nicht dargestellten Ausführungsbeispielen die miteinander korrespondierenden Konturen des Fügewerkzeuges 20 und der Ausnehmung 22 von einer kreisrunden Form abweichen. So sind beispielsweise ovale oder eckige Querschnitte möglich. Weiterhin können pro Erregerpol 12 mehrere der Ausnehmungen 22 vorgesehen sein, die dann beispielsweise axial beabstandet zueinander angeordnet sind. Für eine derartige Ausführung besitzt dann die Fügevorrichtung eine entsprechende Anzahl von Fügewerkzeugen 20.

Das Fügewerkzeug 20 ist zweistufig ausgebildet, das heißt, dieses besitzt einen ersten durchmesserkleineren Abschnitt 26 und einen sich hieran anschließenden durchmessergrößeren Abschnitt 28. Die Abschnitte 26 und 28 gehen über eine Ringstufe 30 ineinander über. Die Ringstufe 30 ist im gezeigten Beispiel rechtwinklig zur Wirkung der Fügekraft F angeordnet. Nach weiteren, nicht dargestellten Ausführungsbeispielen kann die Ringstufe 30 einen konischen Verlauf besitzen.

Nach Positionierung des Erregerpoles 12 beziehungsweise des Polgehäuses 10 wird das Fügewerkzeug 20 mit der Fügekraft F beaufschlagt. Hierbei wird das Polgehäuse 10 gegen die Erregerpole 12 gedrückt. Als Gegenlager für die Fügekraft F dient der Dorn 14. In einem ersten Verfahrensschritt berührt das Fügewerkzeug 20 mit seinem Abschnitt 26 das Polgehäuse 10 und verdrängt hierbei - entsprechend der Dimensionierung des Abschnittes 26 - eine bestimmte Materialmenge des Polgehäuses 10 in die sich gegenüberliegend zu dem Fügewerkzeug 20 befindende Ausnehmung 22. Durch Aufrechterhalten der Fügekraft F gelangt die Ringstufe 30 in Berührungskontakt mit dem Polgehäuse 10, so daß über den durchmessergrößeren Abschnitt 28 nunmehr die Fügekraft F in das Polgehäuse 10 eingebracht wird. Es entsteht somit - der Größe der Ringstufe 30 entsprechend - ein zusätzlicher flächiger Druck auf das Polgehäuse 10, so daß eine obere Kante 32 der Ausnehmung 22 unter der Fügekraft F in die Ausnehmung 24 hineindrängt. Durch dieses Hineindrängen der Kante 32 in die Ausnehmung 22 wird, wie Figur 2 näher zeigt, das zuvor über den Abschnitt 26 des Fügewerkzeugs 40 verdrängte Material, das einen Niet 34 bildet, hinterschnitten. Anhand der in Figur 2 dargestellten fertigen Fügeverbindung wird deutlich, daß durch den Hinterschnitt 33 der Kante 32, die aus dem Material des Erregerpoles 12 besteht, der aus dem Material des Polgehäuses 10 verdrängte Niet 34 fest eingespannt wird. Durch die während des erfindungsgemäßen Fügens auftretenden hohen Kräfte werden die Erregerpole 12 in Richtung des Polgehäuses 10 gedrängt, so daß ein zwischen den Erregerpolen 12 und dem Polgehäuse 10 verbleibender Spalt 35 auf sein technisches Minimum beschränkt bleibt.

Die form- und kraftschlüssige Verbindung zwischen den Erregerpolen 12 und dem Polgehäuse 10 bleibt dauerhaft auch nach Entnahme aus der Fügevorrichtung erhalten. Durch die beispielsweise kreisrunde Ausbildung der Ausnehmung 22 und des Fügewerkzeuges 20 wird der Niet 34 auf einer Umfangslinie entlang der Kante 32 eingeschnürt, das heißt hinterschnitten. Somit können auch in axialer Richtung der Erregerpole angreifende Kräfte während des bestimmungsgemäßen Einsatzes der elektrischen Maschine sicher abgefangen werden, ohne daß es zu einer Lockerung und damit Vergrößerung des Spaltes 35 kommt. Entsprechend der Anzahl der gewählten Verbindungsstellen zwischen einem Erregerpol 12 und dem Polgehäuse 10 kann eine sichere und feste Verbindung dauerhaft gewährleistet werden.

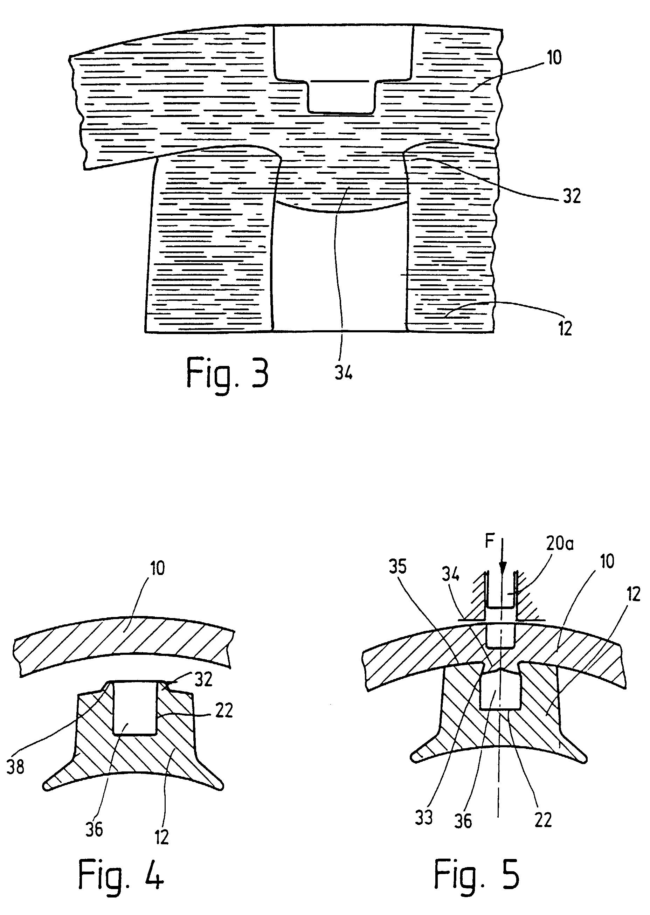

Das in Figur 3 gezeigte Schliffbild der Verbindungsstelle zwischen dem Polgehäuse 10 und dem Erregerpol 12 verdeutlicht das Hintergreifen der Kante 32 des aus dem Material des Polgehäuses 10 in die Ausnehmung 22 verdrängten Nietes 34.

In den Figuren 4 und 5 ist eine weitere Ausführungsvariante für die Herstellung einer Fügeverbindung zwischen Erregerpol 12 und Polgehäuse 10 gezeigt. Gleiche Teile wie in Figur 1 sind mit gleichen Bezugszeichen versehen und nicht nochmals erläutert. Auf die Darstellung der Fügevorrichtung wurde aus Gründen der Übersichtlichkeit verzichtet. Anhand der Figur 4 wird deutlich, daß die Ausnehmung 22 als Sackloch 36 ausgebildet sein kann. Sehr vorteilhaft kann das Sackloch 36 mittels eines sogenannten Napfens in den Erregerpol 12 eingebracht werden, wobei gleichzeitig die Kante 32 als eine die Ausnehmung 22 umlaufende Wulst 38 aufgeworfen wird.

Anhand der in Figur 5 gezeigten Fügeverbindung zwischen dem Polgehäuse 10 und dem Erregerpol 12 wird deutlich, daß beim Fügen, wobei hier das Fügen mit einem einstufigen Prägestempel 20a durchgeführt werden kann, durch die Fügekraft F der Wulst 38 in die Ausnehmung 22 gedrängt wird, so daß der durch das Fügewerkzeug in die Ausnehmung 22 verdrängte Niet 34 von der Kante 32 des Erregerpoles 12 ebenfalls eingeschnürt beziehungsweise hinterschnitten wird. Somit ist ebenfalls eine dauerhafte form- und kraftschlüssige Verbindung zwischen den Erregerpolen 12 und dem Polgehäuse 10 möglich. Der Niet 34 wird durch den Hinterschnitt 33 fest eingespannt, wobei ebenfalls eine Zugkraft zwischen dem Polgehäuse 10 und den Erregerpolen 12 aufgebaut wird, so daß der Spalt 35 auf sein Minimum beschränkt bleibt. Das Entstehen von sekundären Luftspalten wird somit vermieden.

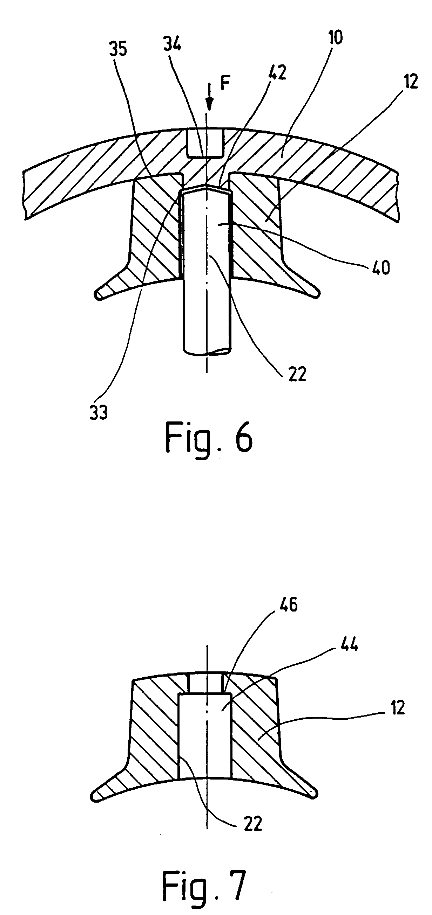

Figur 6 zeigt eine schematische Darstellung durch eine weitere Fügeverbindung. Gleiche Teile sind wiederum mit gleichen Bezugszeichen versehen und nicht nochmals erläutert. Bei dem hier gezeigten Ausführungsbeispiel ist die Ausnehmung 22 des Erregerpoles 12 wiederum als Durchgangsbohrung ausgeführt. Während des zu den Figuren 1 bis 3 erläuterten Fügevorgangs wird beim Angreifen der Fügekraft F in die Ausnehmung 22 ein Gegenstempel 40 gehalten, der an seinem dem Polgehäuse 10 zugewandten Ende eine konische Anschrägung 42 aufweist. Hierdurch wird erreicht, daß während des Fügens das den Niet 34 ergebende und in die Ausnehmung 22 verdrängte Material des Polgehäuses 10 auf die konische Fläche 42 des Gegenstempels 40 aufläuft und seitlich verdrängt wird. Hierdurch kommt es ebenfalls zur Ausbildung des Hinterschnitts 33, der eine sichere form- und kraftschlüssige Verbindung zwischen dem Erregerpol und dem Polgehäuse 10 gewährleistet.

Eine weitere Ausführungsvariante der Ausnehmung 22 des Erregerpoles 12 zeigt Figur 7. Hier ist zur Verdeutlichung lediglich der Erregerpol 12 in einer Schnittdarstellung gezeigt. Die Ausbildung 22 ist als eine Stufenbohrung 44 ausgebildet, die an ihrer dem Polgehäuse 10 zugewandten Seite über eine Stufe 46 in einen durchmesserkleineren Abschnitt übergeht. Hierdurch wird erreicht, daß das den Niet 34 ergebende verdrängte Material des Polgehäuses 10 bei Auflaufen auf einen hier nicht dargestellten Gegenstempel unter die Stufe 46 verdrängt wird, so daß wiederum ein Hinterschnitt 33 entsteht.

Insgesamt wird deutlich, daß allen Ausführungsbeispielen gemeinsam ist, daß mittels einer einfach durchzuführenden sogenannten Präge- bzw. Stanznietung eine einfache und dauerhafte Fügeverbindung zwischen den Erregerpolen 12 und dem Polgehäuse 10 geschaffen werden kann, die insbesondere durch die Ausbildung eines Hinterschnitts 33 dauerhaft form- und kraftschlüssig ist. Die Ausbildung des Hinterschnitts 33 kann hierbei sowohl durch eine besondere Ausbildung der Ausnehmung 22 und/oder des Fügewerkzeugs 20 erreicht werden. In allen Ausführungsfällen wird die Fügeverbindung mit nur einem Arbeitshub des als Prägestempel ausgebildeten Fügewerkzeugs sowohl kraft- als auch formschlüssig hergestellt.

## Patentansprüche

1. Verfahren zum Herstellen einer Fügeverbindung zwischen Erregerpolen und Polgehäuse einer Elektromaschine, wobei mittels eines Fügewerkzeuges eine Fügekraft auf die Fügestelle ausgeübt wird und hierdurch eine form- und kraftschlüssige Verbindung hergestellt wird, indem Material des Polgehäuses jeweils in eine Ausnehmung der Erregerpole verdrängt wird, **dadurch gekennzeichnet,** daß mit dem Fügewerkzeug (20) das Material des Polgehäuses (10) und des jeweiligen Erregerpoles (12) punktuell an wenigstens einer Fügestelle in eine korrespondierende Ausnehmung (22) des Erregerpoles (12) derart verdrängt wird, daß eine Hinterschneidung in der Ausnehmung gebildet wird.

2. Verfahren nach Anspruch 1, **dadurch gekennzeichnet**, daß das Material des Polgehäuses (10) mittels einer Stanznietung von einem Stempel (20) in die Ausnehmung (22) verdrängt wird.

3. Verfahren nach einem der vorhergehenden Ansprüche, **dadurch gekennzeichnet,** daß eine äußere Kante (32) der Ausnehmung (22) in das verdrängte Material des Polgehäuses (10) verdrängt wird.

4. Verfahren nach einem der vorhergehenden Ansprüche, **dadurch gekennzeichnet,** daß die Stanznietung mit einem zweistufigen Prägestempel (20) erfolgt.

5. Verfahren nach einem der vorhergehenden Ansprüche, **dadurch gekennzeichnet,** daß ein die Kante (32) der Ausnehmung (22) umgreifender Wulst (38) zumindest teilweise in das einen Niet (34) ergebende Material des Polgehäuses (10) verdrängt wird.

6. Verfahren nach einem der vorhergehenden Ansprüche, **dadurch gekennzeichnet,** daß der Wulst (38) bei der Herstellung der Ausnehmung (22) erzeugt wird.

7. Verfahren nach einem der vorhergehenden Ansprüche, **dadurch gekennzeichnet,** daß die Ausnehmung (22) als Sackloch (36) ausgebildet wird.

8. Verfahren nach einem der Ansprüche 1 bis 6, **dadurch gekennzeichnet,** daß die Ausnehmung (22) als Durchgangsloch (24) ausgebildet wird.

9. Verfahren nach einem der vorhergehenden Ansprüche, **dadurch gekennzeichnet**, daß eine der Fügekraft (F) entgegengerichtete Haltekraft von einem Montageträger (14) der Erregerpole (12) aufgebracht wird.

10. Verfahren nach Anspruch 9, **dadurch gekennzeichnet,** daß der Montageträger ein Dorn ist, und daß die zu einer elektrischen Maschine gehörenden Erregerpole (12) über den Umfang des Dornes (14) gehalten sind, diese in das Polgehäuse (10) verlagert werden und alle Erregerpole (12) gleichzeitig mit dem Polgehäuse (10) gefügt werden.

11. Elektrische Maschine mit einem Polgehäuse und darin angeordneten Erregerpolen, welche mittels dem Verfahren nach einem der vorhergehenden Ansprüche am Polgehäuse befestigbar sind, **dadurch gekennzeichnet**, daß Erregerpole (12) und Polgehäuse (10) durch an mindestens einer Ausnehmung (22) des Erregerpoles (12) verdrängtes Material (34, 32) des Polgehäuses (10) und des jeweiligen Erregerpoles (12) kraft- und formschlüssig derart verbunden sind, daß das Material eine Hinterschneidung in der Ausnehmung bildet.

## Claims

1. Method for the production of a joint between the exciter poles and pole housing of an electric machine, a joining force being exerted on the joining site by means of a joining tool and, as a result, a positively- and force-locking connection being produced by material of the pole housing in each case being displaced into a recess in the exciter poles,
characterized in that the material of the pole housing (10) and of the respective exciter pole (12) is displaced by the joining tool (20) at points at at least one joining site into a corresponding recess (22) in the exciter pole (12) in such a manner that an undercut is formed in the recess.

2. Method according to Claim 1, characterized in that the material of the pole housing (10) is displaced into the recess (22) by a punch (20) by means of a punching-riveting operation.

3. Method according to one of the preceding claims, characterized in that an outer edge (32) of the recess (22) is displaced into the displaced material of the pole housing (10).

4. Method according to one of the preceding claims, characterized in that the punching-riveting operation is effected using a two-tier embossing punch (20).

5. Method according to one of the preceding claims, characterized in that a bead (38) reaching around the edge (32) of the recess (22) is at least partially displaced into the material of the pole housing (10) which produces a rivet (34).

6. Method according to one of the preceding claims, characterized in that the bead (38) is produced during the production of the recess (22).

7. Method according to one of the preceding claims, characterized in that the recess (22) is designed as a blind hole (36).

8. Method according to one of Claims 1 to 6, characterized in that the recess (22) is designed as a through hole (24).

9. Method according to one of the preceding claims, characterized in that a holding force directed counter to the joining force (F) is applied by an assembly carrier (14) of the exciter poles (12).

10. Method according to Claim 9, characterized in that the assembly carrier is a mandrel, and in that the exciter poles (12) belonging to an electric machine are held over the periphery of the mandrel (14), they are moved into the pole housing (10) and all of the exciter poles (12) are simultaneously joined with the pole housing (10).

11. Electric machine having a pole housing and exciter poles which are arranged therein and can be fixed to the pole housing by means of the method according to one of the preceding claims, characterized in that the exciter poles (12) and pole housing (10) are connected in a force- and positively-locking manner by material (34, 32) which is displaced at at least one recess (22) in the exciter pole (12) of the pole housing (10) and of the respective exciter pole (12) in such a manner that the material forms an undercut in the recess.

## Revendications

1. Procédé pour fabriquer une liaison de jonction entre des pôles d'excitation et la carcasse polaire d'un moteur électrique, une force de jonction étant exercée au moyen d'un outil de jonction à l'endroit de jonction et une liaison par complémentarité de forme et par engagement par la force étant établie de cette façon, en refoulant de la matière de la carcasse polaire respectivement dans un évidement des pôles d'excitation,
caractérisé en ce que
avec l'outil de jonction (20) on refoule la matière de la carcasse polaire (10) et du pôle d'excitation correspondant (12) ponctuellement en au moins un endroit de jonction dans un évidement correspondant (22) du pôle d'excitation (12) d'une manière telle que l'on forme une contre-dépouille dans l'évidement

2. Procédé selon la revendication 1,
caractérisé en ce que
la matière de la carcasse polaire (10) est refoulée au moyen d'un rivetage par poinçonnage par un poinçon (20) dans l'évidement (22).

3. Procédé selon l'une des revendications précédentes,
caractérisé en ce qu'
on refoule un bord extérieur (32) de l'évidement (22) dans la matière refoulée de la carcasse polaire (10).

4. Procédé selon l'une des revendications précédentes,
caractérisé en ce que
le rivetage par poinçonnage a lieu avec un poinçon de frappe à deux étages.

5. Procédé selon l'une des revendications précédentes,
caractérisé en ce qu'
on refoule un bourrelet (38) qui entoure le bord (32) de l'évidement (22) au moins en partie dans la matière de la carcasse polaire ((10) qui va donner un rivet (34).

6. Procédé selon l'une des revendications précédentes,
caractérisé en ce que
le bourrelet (38) est produit lors de la réalisation de l'évidement (22).

7. Procédé selon l'une des revendications précédentes,
caractérisé en ce que
l'évidement (22) est constitué sous la forme d'un trou borgne (36).

8. Procédé selon l'une des revendications 1 à 6,
caractérisé en ce que
l'évidement (22) est constitué sous la forme d'un trou (24) qui va de bout en bout.

9. Procédé selon l'une des revendications précédentes,
caractérisé en ce qu'
une force de retenue est exercée en sens opposé de la force de jonction (F) par un support de montage (14) des pôles d'excitation (12).

10. Procédé selon la revendication 9,
caractérisé en ce que
• le support de montage est un mandrin, et
• les pôles d'excitation (12) qui font partie d'un moteur électrique, sont maintenus sur le pourtour du mandrin (14), ceux-ci sont déplacés dans la carcasse polaire (10) et l'on joint tous les pôles d'excitation (12) en même temps à la carcasse polaire (10).

11. Moteur électrique avec une carcasse polaire et des pôles d'excitation disposés dedans, qui peuvent être fixés au moyen du procédé selon l'une des revendications précédentes sur la carcasse polaire,
caractérisé en ce que
les pôles d'excitation (12) et la carcasse polaire (10) sont reliés par de la matière (34, 32) de la carcasse polaire (10), qui est refoulée dans au moins un évidement (22) du pôle d'excitation (12) et du pôle d'excitation correspondant (12) par complémentarité de forme et par engagement de force, d'une manière telle que la matière forme une contre-dépouille dans l'évidement.
